# EUROPÄISCHE PATENTANMELDUNG

(11) **EP 3 687 015 A1**
(43) Veröffentlichungstag der Anmeldung: **29.07.2020**
(21) Anmeldenummer: 20151781.0
(22) Anmeldetag: 14.01.2020
(51) Int. Cl.: H02G 15/04, F16L 3/06, F16L 3/223, H02G 3/32

(54) **KABELMAGAZIN**

(30) Priorität: 25.01.2019 DE 102019101936
(71) Anmelder: ebm-papst Mulfingen GmbH & Co. KG, 74673 Mulfingen (DE)
(72) Erfinder: STRÖBEL, Othmar, 74575 Schrozberg (DE); ZELLER, Christian, 74673 Ailringen (DE)
(74) Vertreter: Staeger & Sperling Partnerschaftsgesellschaft mbB

(57) **Zusammenfassung**

Die Erfindung betrifft ein Kabelmagazin (10) zur Anbringung an einem mehrere Adern (2) aufweisenden Kabel (1), wobei das Kabelmagazin (10) einen Aufnahmekörper (11) mit mehreren sich in einer Kabellängsrichtung (L) erstreckenden Aufnahmekammern (12) aufweist, die zumindest einseitig eine Einstecköffnung (13) zum Einführen eines Endes einer Ader (2) aufweisen sowie einem mit der Aufnahmekammer (12) verbundenen Befestigungsabschnitt (14) zur Befestigung des Kabelmagazins (10) am Außenmantel des Kabel (1) mittels einer das Kabel (1) umgreifenden Befestigungsvorrichtung (3).

## Beschreibung

Die Erfindung betrifft ein Kabelmagazin zur Lagerung von insbesondere nicht verwendeten Adern eines mehradrigen Kabels.

Ein Kabel bezeichnet eine ummantelte elektrische Leitung. Ein Kabel kann dabei auch ein Verbund mehrerer Litzen, isolierter Drähte oder Adern sein. Als Ader oder Aderleitung wird ein einzelner Leiter mit seiner Isolierung bezeichnet. Adern sind stromführende Drähte oder Litzen oder auch nur der einzelne Leiter eines Kabels.

Die vorliegende Erfindung bezieht sich auf ein Kabelmagazin für ein mehradriges Kabel, somit ein Kabel, bei dem mehrere Adern vorhanden sind, die sich vorzugsweise in einem gemeinsamen Kabelmantel befinden. Die Erfindung bezieht sich ferner auf ein Kabel mit einem solchen Kabelmagazin.

Bei der elektrischen Verdrahtung werden regelmäßig mehradrige Kabel verlegt, von denen für die jeweilige Applikation jedoch nur oder zunächst nur ein Teil der vorhandenen Adern zur Verbindung oder Bereitstellung bestimmter elektrischer Funktionen Verwendung finden. Die weiteren unbenutzten oder zunächst unbenutzten Adern werden nicht oder erst später bei einer nachgelagerten Montage verwendet.

Wird zum Beispiel ein 5-adriges Kabel für den Anschluss eines einphasig betriebenen Geräts verwendet, so würden 3 Adern benötigt und zwei der Adern blieben anschlussfrei ohne Funktion. Im Stand der Technik wird mit solchen überflüssigen Adern unterschiedlich umgegangen. Teilweise werden die Adern einfach am Ende des abisolierten Kabelmantels abgezwickt oder abgeschnitten, was zu sicherheitstechnischen Problemen in Bezug auf elektrische Sicherheit führen kann. Andere Maßnahmen sehen vor, dass die überschüssigen Aderenden mit einem Isolierelement isoliert werden und dann um das Kabel gewickelt werden. Werden diese Adern in einem späteren Montageschritt wieder benötigt, besteht die Aufgabe der Demontage und das Risiko, dass das Aderende zuvor beschädigt oder unzulässig behandelt wurde.

Eine alternative Lösung sieht das Zurückfalten der freien Adern vor, die dann z. B. mit einem Schrumpfschlauch ummantelt werden.

Im Stand der Technik gibt es jedoch keine zufriedenstellende, zuverlässige und sichere Vorrichtung oder Methode, wie mit den (zunächst) nicht verwendeten Aderleitungen zu verfahren ist.

Der Erfindung liegt deshalb die Aufgabe zugrunde, vorbesagte Nachteile zu umgehen und eine Lösung vorzuschlagen, die eine sichere, zuverlässige, platzsparende und kostengünstige Montagemöglichkeit für die (zunächst) nicht verwendeten Adern oder Aderleitungen eines Kabels ermöglicht.

Diese Aufgabe wird durch die Merkmalskombination gemäß Anspruch 1 gelöst.

Ein Grundgedanke der Erfindung besteht darin ein an einem mehradrigen Kabel lösbar befestigbares Kabelmagazin vorzusehen, das so ausgebildet ist, dass es die nicht verwendeten Aderenden sicher und einfach durch eine Einsteckmontage aufnehmen und diese in ihrer Position sicher lagern kann bis diese entweder in einem späteren Montageschritt verdrahtet werden oder ggf. dauerhaft in dieser Lagerposition verbleiben können.

Erfindungsgemäß wird hierzu ein Kabelmagazin zur Anbringung an einem mehrere Adern aufweisenden Kabel vorgeschlagen, wobei das Kabelmagazin einen Aufnahmekörper mit mehreren sich in einer Kabellängsrichtung erstreckenden Aufnahmekammern aufweist, die zumindest einseitig eine Einstecköffnung zum Einführen eines Endes einer Ader aufweisen sowie einen mit der Aufnahmekammer verbundenen Befestigungsabschnitt zur Befestigung des Kabelmagazins am Außenmantel des Kabel mittels einer das Kabel umgreifenden Befestigungsvorrichtung.

In einer vorteilhaften Ausgestaltung der Erfindung ist vorgesehen, dass sich der Befestigungsabschnitt in der Kabellängsrichtung von dem Aufnahmekörper weg erstreckt, wodurch sich eine besonders vorteilhafte Anlagemöglichkeit und Montagefreundlichkeit an einem Kabel ergibt, da dann die Aufnahmekammer im montierten Zustand ebenfalls in dieser Richtung verlaufen und sich die zurückgefalteten Adern, die in die Aufnahmekammern eingeschoben werden, einfach ausrichten und in die Kammern einführen lassen.

Es ist weiter vorteilhaft, wenn sich die Einstecköffnung an einem in Richtung zum Befestigungsabschnitt weisenden Stirnseitenabschnitt des Aufnahmekörpers befinden, was die Montagefreundlichkeit weiter begünstigt.

In einer ebenfalls vorteilhaften Ausgestaltung der Erfindung ist vorgesehen, dass der Aufnahmekörper auf der der Kabel zugewandten Seite eine teilzylinderförmig oder halbzylinderförmig gebogene Anlagefläche zur Anlage am Kabel besitzt. Dabei kann vorgesehen sein, dass der Radius so gewählt ist, dass dieser dem Radius des Kabels in etwa in der Größenordnung des Radius des Außenmantels des Kabels entspricht, für den das betreffende Kabelmagazin ausgelegt ist, wodurch sich eine besonders effiziente und platzsparende Anordnung und Fixierung am Kabel erzielen lässt.

Weiter vorteilhaft ist es, wenn der Aufnahmekörper ebenfalls eine teilzylindermantelförmige oder halbzylindermantelförmige Form besitzt und weiter vorzugsweise mit dem Befestigungsabschnitt eine gemeinsame gebogene Anlagefläche ausbildet.

Hierzu kann mit Vorteil vorgesehen sein, dass der Befestigungsabschnitt eine teilzylindermantelförmige oder halbzylindermantelförmige Form mit einer teilzylindermantelförmig oder halbzylindermantelförmig gebogenen Anlagefläche zur Anlage am Kabel besitzt.

In einer weiteren vorteilhaften Ausführungsform der Erfindung ist vorgesehen, dass der Befestigungsabschnitt auf der der Anlagefläche abgewandten Oberseite ein vorzugsweise L-förmig gebogenes Fixierelement zur axialen Fixierung des Kabelmagazins an einer externen Befestigungsvorrichtung (z. B. einem Kabelbinder) aufweist. Denkbar wäre es auch, wenn ein Kabelbinder unmittelbar z. B. einstückig und/oder einteilig am Kabelmagazin ausgebildet wäre.

Von Vorteil ist es ferner, wenn die Aufnahmekammern einen ersten Kammerabschnitt mit einem ersten Durchmesser zur Aufnahme eines nicht abisolierten Bereichs eines Aderendes und einen sich an den ersten Kammerabschnitt anschließenden zweiten Kammerabschnitt mit einem gegenüber dem ersten Kammerabschnitt geringeren Durchmesser zur Aufnahme eines abisolierten Bereichs des Aderendes aufweisen. Denkbar ist auch eine Ausführung, bei der der zweite Bereich mit dem geringeren Durchmesser dem Außendurchmesser einer nicht abisolierten Ader entspricht und die Ader mit ihrem Mantel in diesen Bereich klemmend eingeführt wird.

Weiter denkbar ist eine jeweils mehrfach abgestufte d. h. im Durchmesser sukzessive reduzierte Kammer mit im Wesentlichen in Serie hintereinander liegenden zylinderförmigen Abschnitten, so dass Adern mit unterschiedlichem Durchmesser klemmend aufgenommen werden können.

In einer weiteren alternativen Ausgestaltung der Erfindung ist vorgesehen, dass die Aufnahmekammern einführseitig über eine vorzugsweise elastisch verformbare Haltelippe oder über Klemmzähne zum klemmenden Halten eines Adermantels einer in die Aufnahmekammer eingesteckten Ader oder über Klemmelemente verfügen. Hierdurch kann ein unbeabsichtigtes Herausrutschen der umgebogenen Adern aus den Aufnahmekammern noch besser verhindert werden.

Ein weiterer Aspekt der vorliegenden Erfindung betrifft ein Verfahren zur Lagerung von nicht verwendeten Adern an einem mehradrigen Kabel mit den folgenden Schritten:
a. Entfernen des Kabelmantels eines Kabels an einem endseitigen Abisolierbereich zum Freilegen von den Aderenden der Adern des Kabels,
b. Anbringen eines wie beschrieben Kabelmagazins mit einer Befestigungsvorrichtung am Kabelmantel des Kabel unmittelbar neben dem Abisolierbereich;
c. Zurückfalten wenigstens einer freigelegten nicht verwendeten Ader um etwa 180° und Einführen des Aderendes der Ader durch eine Einstecköffnung in eine Kontaktkammer des Aufnahmekörpers.

Hierbei ist es von Vorteil, wenn als Befestigungsvorrichtung ein Kabelbinder verwendet wird, der im Bereich des Befestigungsabschnittes um das Kabel und den Befestigungsabschnittes herum befestigt wird, derart, dass das Kabelmagazins an dem Kabel fixiert wird.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine perspektivische Ansicht eines Ausführungsbeispiels eines Kabelmagazin,
- Fig. 2: eine teiltransparente Ansicht des Kabelmagazins aus Figur 1 und
- Fig. 3: eine seitliche Teil-Schnitt-Ansicht durch das Kabelmagazin aus Figur 1, welches an einem Kabel 1 angebracht wurde.

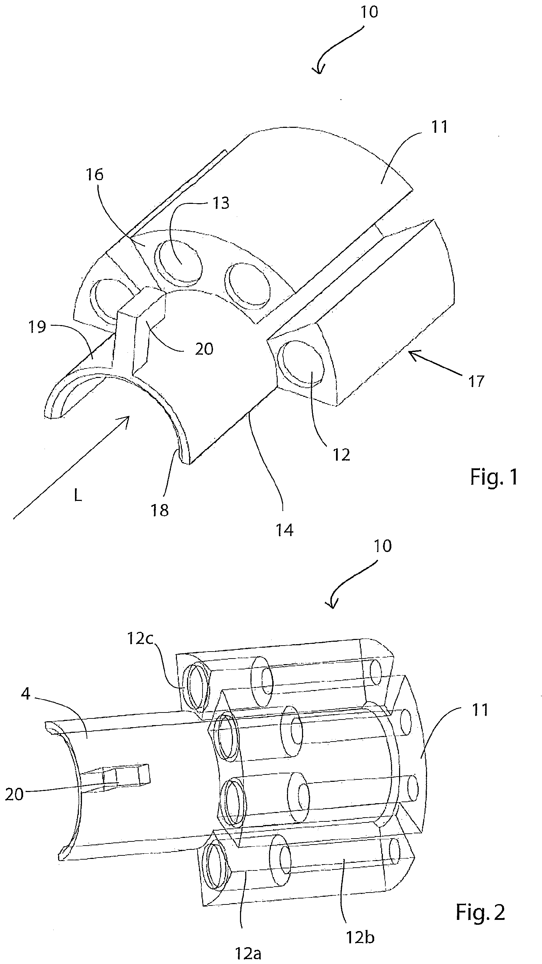

Im Folgenden wird die Erfindung mit Bezug auf die Figuren 1 bis 3 näher beschrieben, wobei gleiche Bezugszeichen auf gleiche strukturelle und/oder funktionale Merkmale hinweisen.

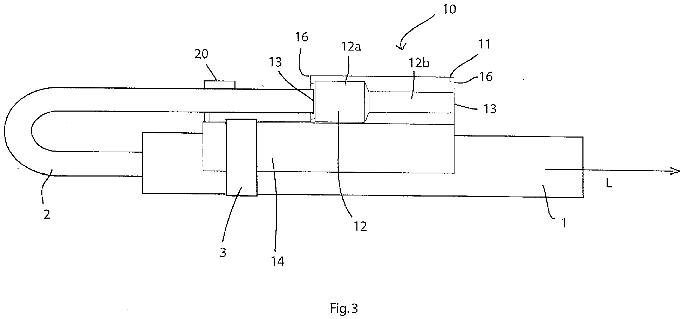

Die Figur 1 zeigt eine perspektivische Ansicht eines Ausführungsbeispiels eines Kabelmagazins 10. Das Kabelmagazin 10 ist ausgebildet zur Anbringung an einem mehrere Adern 2 aufweisenden Kabel 1, wie dies beispielhaft schematisch in der Ansicht der Figur 3 dargestellt wurde. Das Kabelmagazin 10 besitzt einen Aufnahmekörper 11 mit mehreren sich in einer Kabellängsrichtung L erstreckenden Aufnahmekammern 12.

Die Aufnahmekammern 12 besitzen in dieser Ausführung an dem einen Stirnseitenabschnitt 16 jeweils Einstecköffnungen 13 zum Einführen eines Endes einer Ader 2. Hierzu werden die Adern 2 im Bereich ohne Kabelmantel um etwa 180° zurück gefaltet und in die Einstecköffnungen 13 klemmend eingeführt und gelagert.

Von der Aufnahmekammer 12 steht ein in der Kabellängserstreckungsrichtung L gebogener Befestigungsabschnitt 14 hervor, der zur Befestigung des Kabelmagazins am Außenmantel des Kabels 1 mittels einer das Kabel 1 umgreifenden Befestigungsvorrichtung 3 (hier in Form eines Kabelbinders) ausgebildet ist.

Wie gut in der Figur 1 zu erkennen ist, besitzt der Aufnahmekörper 11 eine halbzylinderförmige bzw. halbzylindermantelförmige Form sowie auf der der Kabel zugewanden Seite eine halbzylinderförmig gebogene Anlagefläche 17 zur Anlage am Kabel 1.

In gleicher Weise besitzt der Befestigungsabschnitt 14 eine halbzylindermantelförmige Form mit halbzylinderförmig gebogener Anlagefläche 18 zur Anlage am Kabel 1. Der Befestigungsabschnitt 14 besitzt auf seiner der Anlagefläche 17 abgewandten Oberseite 19 ein L-förmig abgeknicktes Fixierelement 20, das zur axialen Fixierung des Kabelmagazin 10 an dem Kabelbinder 3 vorgesehen ist. Das Fixierelement 20 verhindert ein Verrutschen in Axialrichtung und sichert ferner den Kabelbinder 3 gegen Abrutschen vom Befestigungsabschnitt 14.

Wie in der teiltransparenten Ansicht der Figur 2 und in der Figur 3 zu erkennen, besitzt die Aufnahmekammern 12 einen ersten Kammerabschnitt 12a mit einem ersten Durchmesser und einen sich an den ersten Kammerabschnitt 12a anschließenden zweiten Kammerabschnitt 12b mit einem gegenüber dem ersten Kammerabschnitt 12a geringeren Durchmesser. Einführseitig ist in diesem Ausführungsbeispiel die Aufnahmekammern 12 mit einer elastisch verformbaren Haltelippe 12c zum klemmenden Halten eines Adermantels einer Ader 2 ausgebildet.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Kabelmagazin (10) zur Anbringung an einem mehrere Adern (2) aufweisenden Kabel (1), wobei das Kabelmagazin (10) einen Aufnahmekörper (11) mit mehreren sich in einer Kabellängserstreckungsrichtung (L) erstreckenden Aufnahmekammern (12) aufweist, die zumindest einseitig eine Einstecköffnung (13) zum Einführen eines Endes einer Ader (2) aufweisen sowie einem mit dem Aufnahmekörper (11) verbundenen Befestigungsabschnitt (14) zur Befestigung des Kabelmagazins (10) am Außenmantel des Kabel (1) mittels einer das Kabel (1) umgreifenden Befestigungsvorrichtung (3).

2. Kabelmagazin (10) gemäß Anspruch 1, **dadurch gekennzeichnet, dass** sich der Befestigungsabschnitt (14) in der Kabellängsrichtung (L) von dem Aufnahmekörper (11) weg erstreckt.

3. Kabelmagazin (10) gemäß Anspruch 1 oder 2, **dadurch gekennzeichnet, dass** sich die Einstecköffnung (13) an einem in Richtung zum Befestigungsabschnitt (14) weisenden Stirnseitenabschnitt (16) des Aufnahmekörpers (11) befinden.

4. Kabelmagazin (10) gemäß einem der vorhergehenden Ansprüche, **dadurch gekennzeichnet, dass** der Aufnahmekörper (11) auf der der Kabel zugewanden Seite eine teilzylinderförmig oder halbzylinderförmig gebogene Anlagefläche (17) zur Anlage am Kabel (1) besitzt.

5. Kabelmagazin (10) gemäß einem der vorhergehenden Ansprüche, **dadurch gekennzeichnet, dass** der Aufnahmekörper (11) eine teilzylindermantelförmige oder halbzylindermantelförmige Form besitzt.

6. Kabelmagazin (10) gemäß einem der vorhergehenden Ansprüche, **dadurch gekennzeichnet, dass** der Befestigungsabschnitt (14) eine teilzylindermantelförmige oder halbzylindermantelförmige Form mit einer teilzylinderförmig oder halbzylinderförmig gebogene Anlagefläche (18) zur Anlage am Kabel (1) besitzt.

7. Kabelmagazin (10) gemäß einem der vorhergehenden Ansprüche, **dadurch gekennzeichnet, dass** der Befestigungsabschnitt (14) auf der der Anlagefläche (17) abgewandten Oberseite (19) ein vorzugsweise L-förmig gebogenes Fixierelement (20) zur axialen Fixierung des Kabelmagazin (10) an der Befestigungsvorrichtung (3) aufweist.

8. Kabelmagazin (10) gemäß einem der vorhergehenden Ansprüche, **dadurch gekennzeichnet, dass** die Aufnahmekammern (12) einen ersten Kammerabschnitt (12a) mit einem ersten Durchmesser zur Aufnahme eines nicht abisolierten Bereichs eines Aderendes und einen sich an den ersten Kammerabschnitt (12a) anschließenden zweiten Kammerabschnitt (12b) mit einem gegenüber dem ersten Kammerabschnitt (12a) geringeren Durchmesser zur Aufnahme eines abisolierten Bereichs des Aderendes aufweisen.

9. Kabelmagazin (10) gemäß einem der vorhergehenden Ansprüche, **dadurch gekennzeichnet, dass** die Aufnahmekammern (12) einführseitig über eine vorzugsweise elastisch verformbare Haltelippe (12c) oder Klemmzähne zum klemmenden Halten eines Adermantels einer in die Aufnahmekammer (12) eingesteckten Ader (2) verfügen.

10. Verfahren zur Lagerung von nicht verwendeten Adern an einem mehradrigen Kabel (1) mit den folgenden Schritten:
a. Entfernen des Kabelmantels (1a) eines Kabels (1) an einem Abisolierbereich (1b),
b. Anbringen eines Kabelmagazins (10) gemäß einem der vorliegenden Ansprüchen mit einer Befestigungsvorrichtung (3) am Kabelmantel des Kabel (1) unmittelbar neben dem Abisolierbereich (1b);
c. Zurückfalten wenigstens einer nicht verwendeten Ader (2) um etwa 180° und Einführen des Aderendes der Ader (2) durch eine Einstecköffnung (13) in eine Kontaktkammer (14) der Aufnahmekörper (11).

11. Verfahren nach Anspruch 10, wobei als Befestigungsvorrichtung (3) ein Kabelbinder verwendet wird, der im Bereich des Befestigungsabschnittes (14) um das Kabel und den Befestigungsabschnittes (14) herum befestigt wird, derart, dass das Kabelmagazins (10) an dem Kabel (10) fixiert wird.
